# EUROPÄISCHE PATENTSCHRIFT

(11) **EP 1 722 198 B1**
(45) Veröffentlichungstag und Bekanntmachung des Hinweises auf die Patenterteilung: **02.05.2012**
(21) Anmeldenummer: 06009947.0
(22) Anmeldetag: 15.05.2006
(51) Int. Cl.: G01C 23/00, B64D 1/22

(54) **Verfahren und Vorrichtung zur Darstellung des Bewegungszustands einer an einen Hubschrauber angehängten Last**
Method and device for representing the movement state of a load attached to a helicopter
Procédé et dispositif destinés à la représentation de l'état de déplacement d'une charge suspendue à un hélicoptère

(30) Priorität: 13.05.2005 DE 102005022212
(43) Veröffentlichungstag der Anmeldung: 15.11.2006
(73) Patentinhaber: Deutsches Zentrum für Luft- und Raumfahrt e.V., 51147 Köln (DE)
(72) Erfinder: Hamers, Mario, 38159 Vechelde (DE); Bouwer, Gerhard, Dr., 38154 Königslutter (DE)
(74) Vertreter: Rehberg Hüppe + Partner

(56) Entgegenhaltungen:
- EP-A- 1 146 317
- WO-A-91/17084

## Beschreibung

Die Erfindung betrifft ein Verfahren zur Darstellung des Bewegungszustands einer an einen Hubschrauber angehängten Last während des Flugs sowie eine entsprechende Vorrichtung.

### STAND DER TECHNIK

Eln Verfahren zur Darstellung des Bewegungszustands einer an einen Hubschrauber angehängten Last während des Flugs sowie eine entsprechende Vorrichtung sind aus der EP 1 146 317 A1 bekannt. Dort geht es darum, dem Piloten eines Hubschraubers zu ermöglichen, ein von außen angeregtes Längs- und/oder Querpendeln einer an den Hubschrauber angehängten Last schnell abzubauen und Manöver so zu fliegen, dass ein Pendeln der angehängten Last erst gar nicht angeregt wird. Zu diesem Zweck wird eine zeitliche Ableitung eines Winkels zwischen der Erdsenkrechten und der Richtung, unter der die jeweilige Last auf den Hubschrauber einwirkt bestimmt und der Darstellung der Orientierung des Hubschraubers auf einem künstlichen Horizont additiv überlagert, Wenn der Pilot auf Änderungen des angezeigten Werts bei dieser überfagerten Winkeldarstellung in einer Weise reagiert, wie er es bei Änderungen des Nick- bzw. Rollwinkels des Hubschraubers gewohnt Ist, wird ein Pendeln der an den Hubschrauber angehängten Last abgebaut bzw. von vornherein vermieden.

Neben dem Pendeln einer an einen Hubschrauber angehängten Last können auch Schwingungen in der Richtung des Abstands zwischen dem Hubschrauber und der angehängten Last auftreten. Diese Schwingungen können auf Elastizitäten eines Seils beruhen, mit dem die Last an den Hubschrauber angehängt Ist, Ursache können aber auch Elastizitäten des Hubschraubers oder der Last selbst sein. Schwingungen in Richtung des Abstands zwischen dem Hubschrauber und der angehängten Last können z. B. in vertikale Bewegungen der Last resultieren, die ihr sanftes Absetzen auf einem harten Untergrund unmöglich machen.

Um Schwingungen in der Richtung des Abstands zwischen einem Hubschrauber und einer angehängten Last zu reduzieren, ist es bekannt, ein passives oder aktives Dämpfungsglied mit dem Seil, mit dem die Last an den Hubschrauber angehängt ist, in Reihe zu schalten. Während passive Dämpfungsglieder nur für eine ganz bestimmte Kombination aus Seillänge und Lastmasse effektiv sind, sind aktive Dämpfungsglieder konstruktiv aufwändig und verbrauchen Energie, die zudem vom Hubschrauber in geeigneter Form zur Verfügung gestellt werden muss. Zudem ist die richtige Ansteuerung aktiver Dämpfungsglieder nur in Abhängigkeit von einem Eingangssignal möglich, das zusätzlich gewonnen werden muss.

Außerdem ist es bekannt, Schwingungen in Richtung des Abstands zwischen einem Hubschrauber und einer angehängten Last durch das Fliegen von speziellen Manövern zur Energiezu- bzw. -abfuhr aus dem System abzubauen. Bei diesen Manövern handelt es sich um spezielle Folgen von Steig-, Sink- und/oder Kurvenflügen, die Zeit und Energie verbrauchen.

Bei keiner der bekannten Maßnahmen, Schwingungen in der Richtung des Abstands zwischen einem Hubschrauber und einer daran angehängten Last zu reduzieren, hat der Pilot eine Möglichkeit, derartige Schwingungen frühzeitig zu erkennen, um ihnen frühzeitig entgegenzuwirken. Vielmehr registriert er die Schwingungen der Last in dieser Richtung erst durch Bewegungsrückführung von der Last auf den Hubschrauber.

Zur Bestimmung der Masse einer an einen Hubschrauber angehängten Last ist es bekannt, eine Kraftmesszelle mit dem Seil, mit dem die Last an den Hubschrauber angehängt ist, in Reihe zu schalten. Aus dem Ausgangssignal der Kraftmesszelle wird dabei ein Anzeigesignal erzeugt, das dem Piloten die Masse der angehängten Last beispielsweise in Kilogramm anzeigt, wenn mit dem Hubschrauber Güter transportiert werden, die nach Masse vergütet werden oder wenn die Transportarbeit des Hubschraubers selbst nach der transportierten Masse vergütet wird.

Aus der WO 91/17084 A1 ist ein Steuerungshilfssystem für einen Hubschrauber bekannt, der eine Last trägt, die eine steife Struktur umfasst, welche an einem Trägerpunkt des Hubschraubers angehängt ist. Ein Neigungsmesser und eine Spannungsmesseinrichtung sind an der steifen Struktur angebracht, an der die Last aufgehängt ist, und Lesegeräte für die Neigung und die Axialspannung der steifen Struktur befinden sich an Bord des Hubschraubers. Die Lesegeräte sind eine Belastungsanzeigeskala und eine Kreuzzeigerskala, die jeweils die Spannung bzw. die Neigung eines Zwischenglieds bezüglich der scheinbaren Vertikalen anzeigen.

### AUFGABE DER ERFINDUNG

Der Erfindung liegt die Aufgabe zugrunde, ein Verfahren zur Darstellung des Bewegungszustands einer an einen Hubschrauber angehängten Last während des Flugs sowie eine entsprechende Vorrichtung aufzuzeigen, die dem Piloten ohne großen technischen Aufwand eine leicht erfassbare Information über den Schwingungszustand der Last in der Richtung des Abstands zwischen dem Hubschrauber und der angehängten Last vermitteln, so dass der Pilot etwaigen Schwingungen unter Einsatz üblicher Verhaltensweisen effektiv entgegenwirken kann.

### LÖSUNG

Die Aufgabe der Erfindung wird durch ein Verfahren mit den Merkmalen des unabhängigen Patentanspruchs 1 und eine entsprechende Vorrichtung mit den Merkmalen des unabhängigen Patentanspruchs 6 gelöst.

Vorteilhafte Ausführungsformen des neuen Verfahrens und der neuen Vorrichtung sind in den Ansprüchen 2 bis 5 bzw. 7 bis 11 definiert.

### BESCHREIBUNG DER ERFINDUNG

Bei dem neuen Verfahren wird dem Piloten des Hubschraubers ein Wert fortlaufend durch eine sich mit einer Änderung des Werts in vertikaler Richtung bewegender Anzeige optisch angezeigt, der von der aktuellen absoluten Höhe der Last, der aktuellen relativen Höhe der Last über dem Boden, dem aktuellen Abstand der Last zu dem Hubschrauber, der aktuellen vertikalen Beschleunigung der Last, der aktuellen Beschleunigung der Last in Richtung ihres Abstands zu dem Hubschrauber und/oder der aktuellen von der Last auf den Hubschrauber in Richtung ihres Abstands zu dem Hubschrauber ausgeübten Kraft abgeleitet wird. Diese Anzeige vermittelt dem Piloten in instruktiver und leicht erfassbarer Weise Informationen über den Bewegungszustand der Last. Wie der angezeigte Wert im Einzelfall festgelegt wird, hängt primär davon ab, was der Pilot als Reaktion auf seine Anzeige leisten soll. Wenn der Pilot beispielsweise vorwiegend dafür sorgen soll, dass die Last sanft auf den Boden aufsetzt, empfiehlt es sich, von der aktuellen relativen Höhe der Last über dem Boden auszugehen. Diese relative Höhe kann direkt oder auch in Form ihrer zeitlichen Ableitung dem angezeigten Wert zugrunde gelegt werden. Die zeitliche Ableitung der relativen Höhe unterscheldet sich dabei nicht von einer zeitlichen Ableitung der absoluten Höhe der Last. Die aktuelle Beschleunigung der Last kann sowohl In vertikaler Richtung als auch in Richtung ihres Abstands zu dem Hubschrauber bestimmt werden, um sie für die Festlegung des anzuzeigenden Wertes zu verwenden. Häufig werden sich diese beiden Beschleunigungen nicht slgnlflkant voneinander unterscheiden. Maximal unterscheiden sie sich um einen Faktor cos φ, wobei φ der Winkel zwischen der Richtung des Abstands der Last zu dem Hubschrauber und der Vertikalen Ist. Mit dem in der Regel geringsten technischen Aufwand kann die aktuelle von der Last auf den Hubschrauber in Richtung Ihres Abstands zu dem Hubschrauber ausgeübte Kraft erfasst werden. Sie entspricht in ihrem Verlauf der Beschleunigung der Last In dieser Richtung. Durch eine Integration einer Kraft bzw. Beschleunigung über der Zelt Ist auch eine zugehörige Geschwindigkeit der Last ermittelbar.

Das Anzeigen des Werts erfolgt vorzugsweise neben einem künstlichen Horizont des Hubschraubers, so dass die Anzeige immer im Blick des Piloten ist, wobei sie durch stärkere Bewegungen Im Falle auftretender Schwingungen die Aufmerksamkeit des Piloten erweckt.

Der Wert, der erfindungsgemäß angezeigt wird, kann überlagert mit einer Steig- bzw. Sinkgeschwindigkeit des Hubschraubers angezeigt werden. Dies erfordert kein zusätzliches Anzeigeinstrument neben der für die Steig- bzw. Sinkgeschwindigkeit sowieso vorhandenen Anzeige. Überdies können dem Piloten durch das Anzeigen des Werts als eine "Stelg- bzw. Sinkgeschwindigkeit" dle notwendigen Reaktionen auf Schwankungen der Anzeige nahe gelegt werden, well von ihm erwartet wird, dass er auf dieses Schwanken genauso reagieren soll, wie auf ein Schwanken der Anzeige der Stelg- bzw. Slnkgeschwindigkelt.

Der Wert, der erfindungsgemäß angezeigt wird, kann unter Verwendung des Ausgangssignals eines Posltlons-, Abstands-, Beschleunlgungs- und/oder Kraftsensors bestimmt werden. Wle bereits angedeutet wurde, kann eln Kraftsensor direkt am Hubschrauber am Befestlgungspunkt eines Seils für das Anhängen der Last vorgesehen sein. Ein Abstandssensor kann ebenfalls am Hubschrauber vorgesehen sein und den aktuellen Abstand der Last zu dem Hubschrauber erfassen. Ein Abstandssensor kann auch an der Last vorgesehen sein, um Ihre Höhe über den Boden zu erfassen. Ein Beschleunigungssensor ist ebenso wie ein Positionssensor an der Last vorzusehen.

Das Ausgangssignal des jeweiligen Sensors wird üblicherweise gefiltert, um die relevanten Frequenzantelle von Signalrauschen zu trennen. Zusätzlich soll das Ausgangssignal, in Abhängigkeit davon, um was für ein Signal es sich handelt, differenziert oder integriert werden. Durch einen Verstärkungs- bzw. Wichtungsfaktor wird eine Skallerung des angezeigten Wertes bzw. die Wichtung mehrerer Komponenten bei der Ausbildung des Werts aus einzelnen Summanden bzw. bei der Überlagerung des Werts mit der Steig- bzw. Sinkgeschwindigkeit festgelegt.

Bei der neuen Vorrichtung zur Darstellung des Bewegungszustands ist ein Anzeigeinstrument für den erfindungsgemäß anzuzeigenden Wert vorgesehen, das den Wert fortlaufend durch eine sich mit einer Änderung des Werts in vertikaler Richtung bewegende Anzeige optisch anzeigt. Vorzugsweise Ist das Anzeigeinstrument das Anzelgelnstrument, das üblicherwelse zum Anzeigen der Steig- bzw. Sinkgeschwindlgkelt des Hubschraubers vorgesehen ist und das neben einem künstlichen Horizont des Hubschraubers angeordnet ist. Dabei kann das Anzeigeinstrument ein Teilbereich eines Anzeigebildschirms oder einer in das Slchtfeid eines Piloten des Hubschraubers projektierten Instrumentenanzeige sein.

Für die Sensoren zur Gewinnung des Ausgangssignals, von dem der erfindungsgemäße anzuzeigende Wert abgeleitet wird, kann auf übliche Technologie zurückgegriffen werden. Als Abstandssensoren können beispielsweise Ultraschallsensoren verwendet werden. Als Posltionssensoren sind GPS-Sensoren elnsetzbar. Beschleunlgungs- und Kraftsensoren sind in verschiedensten Ausführungsformen kommerziell verfügbar.

Vorteilhafte Weiterblldungen der Erfindung ergeben sich aus den abhängigen Patentarisprüchen und der gesamten Beschreibung. Weitere Merkmale sind den Zeichnungen - Insbesondere den dargestellten Geometrien und den relativen Abmessungen mehrerer Bauteile zueinander sowie deren relativer Anordnung und Wirkverblndung - zu entnehmen. Die Kombination von Merkmalen unterschiedlicher Ausführungsformen der Erfindung oder von Merkmalen unterschiedlicher Patentansprüche abweichend von den gewählten Rückbeziehungen ist ebenfalls möglich und wird hiermit angeregt. Dies betrifft auch solche Merkmale, die In separaten Zeichnungsfiguren dargestellt sind oder bei deren Beschreibung genannt werden. Diese Merkmale können auch mit Merkmalen unterschiedlicher Patentansprüche komblnlart werden.

### KURZBESCHREIBUNG DER FIGUR

Im Folgenden wird die Erfindung anhand eines in der Figur skizzierten Ausführungsbelspiels weiter erläutert und beschrieben.

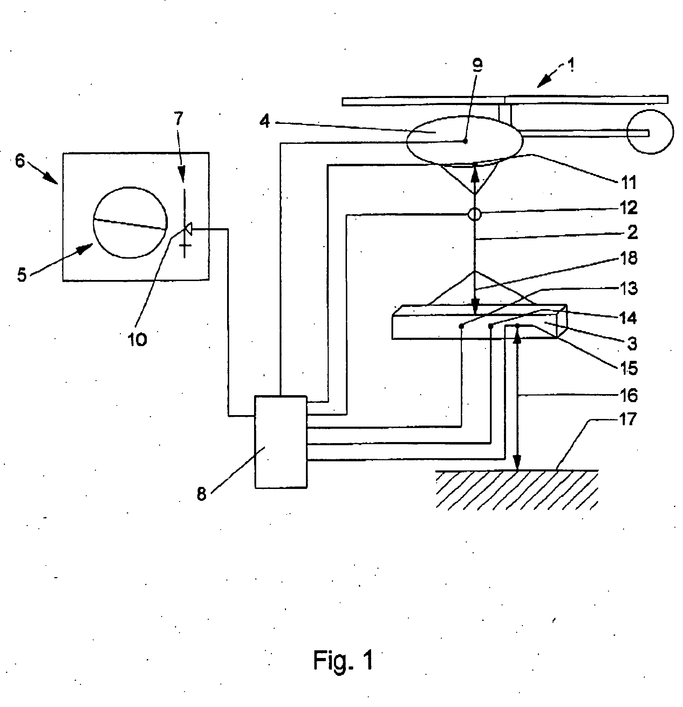

- **Fig. 1**: zeigt eine Prinzipskizze zur Umsetzung der Erfindung bel einem Hubschrauber mlt einer angehängten Last.

### FIGURENBESCHREIBUNG

**Fig. 1** zeigt einen Hubschrauber 1 an den mit einem Seil 2 eine Last 3 angehängt Ist. Im Cockpit 4 des Hubschraubers 1 wird einem Piloten des Hubschraubers ein künstlicher Horizont 5 auf einer instrurnentenanzeige 6 angezeigt. Neben dem künstlichen Horizont 5 ist ein Anzeigeinstrument 7 angeordnet, das normalerweise für die Steig- bzw. Sinkgeschwindigkeit des Hubschraubers vorgesehen Ist. Die Steig- bzw. Sinkgeschwindigkeit des Hubschraubers 1 wird von einer Auswerteeinrichtung 8 unter Verwendung des Signals eines Höhensensors 9 bestimmt und so auf dem Anzeigeinstrument 7 angezeigt, dass sich mit einer Änderung des Werts der Steig- bzw. Slnkgeschwindigkelt eine Anzeige 10 in vertikaler Richtung bewegt. Die Auswerteeinrichtung 8 ist hier dazu vorgesehen, alternativ oder der Steig- bzw. Sinkgeschwindigkeit überlagert, einen Wert auf dem Anzeigeinstrument 7 fortlaufend anzuzeigen, der von dem Ausgangssignal eines oder mehrerer der folgenden Sensoren abgeleitet ist. Ein Abstandssensor 11 bestimmt den aktuellen Abstand 18 der Last 3 zu dem Hubschrauber 1 in Richtung des Seils 2. Ein Kraftsensor 12 erfasst den aktuellen Wert der von der Last 3 in Richtung des Seils 2 auf den Hubschrauber 1 ausgeübten Kraft. Ein Beschleunigungssensor 13 erfasst dle aktuelle Beschleunigung der Last 3. Ein Positionssensor 14 erfasst die aktuelle absolute Positlon der Last 3 und ein Abstandssensor 15 erfasst den Abstand 16 der Last 3 von Boden 17. Jedes der Ausgangssignale der Sensoren 11 bis 15 gibt Informationen über den Bewegungszustand der Last 3 in vertikaler Richtung bzw. in Richtung des Sells 2 an die Auswerteeinrichtung 8. Diese Informationen werden von der Auswerteeinrichtung 8 auf dem Anzeigeinstrument 7 in Form der Anzeige 10 so dargestellt, dass der Pilot mit seinen Üblichen Reaktionen auf eine sich ändernde Steig- und Sinkgeschwindigkeit, die üblicherweise auf dem Anzeigeinstrument 7 angezeigt wird, Schwingungen der Last 3 in vertikaler Richtung bzw, In Richtung ihres Abstands zu dem Hubschrauber wieder abbaut bzw. von vom herein verhindert. Dabei kann die Auswerteeinheit 8 die Jewelllgen Ausgangssignale flltern, integrieren, differenzieren, verschiedene Ausgangssignale in unterschiedlicher Gewichtung miteinander addleren und den so ermittelten Wert der üblicherwelse auf dem Anzeigeinstrument 7 angezeigten Steig- bzw. Sinkgeschwindigkeit überlagern.

### BEZUGSZEICHENLISTE

- 1: Hubschrauber
- 2: Seil
- 3: Last
- 4: Cockpit
- 5: künstlicher Horizont
- 6: Instrumentenanzeige
- 7: Anzeigeinstrument
- 8: Auswerteeinrichtung
- 9: Höhensensor
- 10: Anzeige
- 11: Abstandssensor
- 12: Kraftsensor
- 13: Beschleunigungssensor
- 14: Posltlonssensor
- 15: Abstandssensor
- 16: Abstand
- 17: Boden
- 18: Abstand

## Patentansprüche

1. Verfahren zur Darstellung des Bewegungszustands einer an einen Hubschrauber angehängten Last während des Flugs, **dadurch gekennzeichnet, dass** dem Piloten des Hubschraubers (1) ein Wert, der durch eine zeitliche Ableitung von der aktuellen absoluten Höhe der Last (3), der aktuellen relativen Höhe der Last (3) über dem Boden (17) und/oder dem aktuellen Abstand (18) der Last (3) zu dem Hubschrauber (1) und/oder durch eine zeitliche Integration von der aktuellen vertikalen Beschleunigung der Last (3), der aktuellen Beschleunigung der Last (3) in Richtung ihres Abstands (18) zu dem Hubschrauber (1) und/oder der aktuellen von der Last (3) auf den Hubschrauber (1) in Richtung ihres Abstands (18) zu dem Hubschrauber (1) ausgeübten Kraft abgeleitet wird und der einer vertikalen Geschwindigkeit der Last entspricht, fortlaufend durch eine sich mit einer Änderung des Werts in vertikaler Richtung bewegende Anzeige (10) optisch angezeigt wird.

2. Verfahren nach Anspruch 1, **dadurch gekennzeichnet, dass** der Wert neben einem künstlichen Horizont (5) des Hubschraubers (1) angezeigt wird.

3. Verfahren nach Anspruch 1 oder 2, **dadurch gekennzeichnet, dass** der Wert überlagert mit einer Steig- bzw. Sinkgeschwindigkeit des Hubschraubers (1) angezeigt wird.

4. Verfahren nach einem der Ansprüche 1 bis 3, **dadurch gekennzeichnet, dass** der Wert unter Verwendung des Ausgangssignals eines Positionssensors (14), Abstandssensor (11, 15), Beschleunigungssensors (13) und/oder Kraftsensors (12) bestimmt wird.

5. Verfahren nach Anspruch 4, **dadurch gekennzeichnet, dass** das Ausgangssignal gefiltert, differenziert, integriert und/oder mit einem Wichtungsfaktor multipliziert als Summand für den Wert verwendet wird.

6. Vorrichtung zur Darstellung des Bewegungszustands einer an einen Hubschrauber angehängten Last während des Flugs, **dadurch gekennzeichnet, dass** ein Anzeigeinstrument (7) für einen Wert vorgesehen ist, der durch eine zeitliche Ableitung von der aktuellen absoluten Höhe der Last (3), der aktuellen relativen Höhe der Last (3) über dem Boden (16) und/oder dem aktuellen Abstand (18) der Last (3) zu dem Hubschrauber (1) und/oder durch eine zeitliche Integration von der aktuellen vertikalen Beschleunigung der Last (3), der aktuellen Beschleunigung der Last (3) in Richtung ihres Abstands (18) zu dem Hubschrauber (1) und/oder der aktuellen von der Last (3) auf den Hubschrauber (1) in Richtung ihres Abstands (18) zu dem Hubschrauber (1) ausgeübten Kraft abgeleitet ist und der einer vertikalen Geschwindigkeit der Last entspricht, wobei das Anzeigeinstrument (7) dazu ausgelegt ist, den Wert fortlaufend durch eine sich mit einer Änderung des Werts in vertikaler Richtung bewegende Anzeige (10) optisch anzuzeigen.

7. Vorrichtung nach Anspruch 6, **dadurch gekennzeichnet, dass** das Anzeigeinstrument (7) neben einem künstlichen Horizont (5) des Hubschraubers (1) angeordnet ist.

8. Vorrichtung nach Anspruch 6 oder 7, **dadurch gekennzeichnet, dass** das Anzeigeinstrument (7) alternativ und/oder überlagert zum Anzeigen einer Steig- bzw. Sinkgeschwindigkeit des Hubschraubers (1) vorgesehen ist.

9. Vorrichtung nach einem der Ansprüche 6 bis 8, **dadurch gekennzeichnet, dass** eine Auswerteeinrichtung (8) den Wert unter Verwendung des Ausgangssignals eines an der Last (3) bzw. dem Hubschrauber (1) angeordneten Positionssensors (14), Abstandssensors (11, 15), Beschleunigungssensors (13) und/oder Kraftsensors (12) bestimmt.

10. Vorrichtung nach Anspruch 9, **dadurch gekennzeichnet, dass** die Auswerteeinrichtung (8) ein Filter, ein Differenzierglied, ein Integrierglied und/oder einen Proportionalverstärker sowie einen Addierer für mindestens ein Ausgangssignal aufweist.

11. Vorrichtung nach einem der Ansprüche 6 bis 10, **dadurch gekennzeichnet, dass** das Anzeigeinstrument (7) ein Teilbereich eines Anzeigebildschirms oder einer in das Sichtfeld eines Piloten des Hubschraubers (1) projizierten Instrumentenanzeige (6) ist.

## Claims

1. A method of representing the movement state of a load attached to a helicopter during the flight, **characterised in that** a value which is derived from the present absolute height of the load (3), the present relative height of the load (3) above the ground (17) and/or the present distance (18) of the load (3) to the helicopter (1) by means of a derivative with respect to time, and/or from the present vertical acceleration of the load (3), the present acceleration of the load (3) in direction of its distance (18) to the helicopter (1) and/or the present force exerted by the load (3) on the helicopter (1) in the direction of its distance (18) to the helicopter (1) by means of an integration with respect to time, and which corresponds to a vertical velocity of the load, is continuously optically displayed to the pilot of the helicopter (1) by a display (10) which moves in vertical direction with any change of the value.

2. A method of claim 1, **characterised in that** the value is displayed next to an artificial horizon (5) of the helicopter (1).

3. The method of claim 1 or 2, **characterised in that** the value is displayed superimposed with a rate of ascend or descend of the helicopter (1).

4. The method of any of the claims 1 to 3, **characterised in that** the value is determined by using the output signal of a position sensor (14), a distant sensor (11, 15), an acceleration sensor (13) and/or a force sensor (12).

5. The method of claim 4, **characterised in that** the output signal is filtered, differentiated, integrated of multiplied by a weighting factor for being used as a summand for the value.

6. An apparatus for representing the movement state of a load attached to a helicopter during the flight, **characterised in that** a display instrument (7) is provided for a value which is derived from the present absolute height of the load (3), the present relative height of the load (3) above the ground (17) and/or the present distance (18) of the load (3) to the helicopter (1) by means of a derivative with respect to time, and/or from the present vertical acceleration of the load (3), the present acceleration of the load (3) in direction of its distance (18) to the helicopter (1) and/or the present force exerted by the load (3) on the helicopter (1) in the direction of its distance (18) to the helicopter (1) by means of an integration with respect to time, and which corresponds to a vertical velocity of the load, wherein the display instrument (7) is configured to continuously display the value by a display (10) moving in vertical direction with any change of the value.

7. The apparatus of claim 6, **characterised in that** the display instrument (7) is arranged next to an artificial horizon of the helicopter (1).

8. The apparatus of claim 6 or 7, **characterised in that** the display instrument (7) is provided for alternatively and/or in a superimposed way indicating a rate of ascend or descend of the helicopter (1).

9. The apparatus of any of the claims 6 to 8, **characterised in that** an evaluation device (8) determines the value using the output signal of a position sensor (14), a distance sensor (11, 15), an acceleration sensor (13) and/or a force sensor (16) arranged at the load (3) or the helicopter (1).

10. The apparatus of claim 9, **characterised in that** the evaluation device (8) comprises a filter, a differentiating member, an integrating member and/or an proportional amplifier as well as an adder for at least one output signal.

11. The apparatus of any of the claims 6 to 10, **characterised in that** the display instrument (7) is a partial area of a display screen and/or an instrument display (6) projected into the field of view of a pilot of the helicopter (1).

## Revendications

1. Procédé destiné à représenter l'état de déplacement d'une charge accrochée à un hélicoptère pendant le vol, **caractérisé en ce qu'**une valeur, qui est déduite par une dérivée dans le temps de la hauteur absolue actuelle de la charge (3), de la hauteur relative actuelle de la charge (3) au-dessus du sol (17) et/ou de la distance (18) actuelle entre la charge (3) et l'hélicoptère (1) et/ou par une intégration dans le temps de l'accélération verticale actuelle de la charge (3), de l'accélération actuelle de la charge (3) dans le sens de sa distance (18) à l'hélicoptère (1) et/ou de la force actuelle, exercée par la charge (3) sur l'hélicoptère (1) en direction de sa distance (18) à l'hélicoptère (1) et qui correspond à une vitesse verticale de la charge, est affichée visuellement pour le pilote de l'hélicoptère (1) en permanence par un affichage (10) se déplaçant avec une variation de la valeur dans le sens vertical.

2. Procédé selon la revendication 1, **caractérisé en ce que** la valeur est affichée à côté d'un horizon (5) artificiel de l'hélicoptère (1).

3. Procédé selon la revendication 1 ou 2, **caractérisé en ce que** la valeur est affichée en superposition avec une vitesse de montée ou de descente de l'hélicoptère (1).

4. Procédé selon l'une des revendications 1 à 3, **caractérisé en ce que** la valeur est déterminée en utilisant le signal de sortie d'un capteur de position (14), d'un capteur de distance (11, 15), d'un capteur d'accélération (13) et/ ou d'un capteur de force (12) .

5. Procédé selon la revendication 4, **caractérisé en ce que** le signal de sortie est filtré, différencié, intégré et/ou multiplié avec un facteur de pondérance, utilisé comme cumulande pour la valeur.

6. Dispositif destiné à représenter l'état de déplacement d'une charge accrochée à un hélicoptère pendant le vol, **caractérisé en ce qu'**un instrument d'affichage (7) est prévu pour une valeur, qui est déduite par une dérivée dans le temps de la hauteur absolue actuelle de la charge (3), de la hauteur relative actuelle de la charge (3) au-dessus du sol (16) et/ou de la distance actuelle (18) de la charge (3) à l'hélicoptère (1) et/ou par une intégration dans le temps de l'accélération verticale actuelle de la charge (3), de l'accélération actuelle de la charge (3) en direction de sa distance (18) à l'hélicoptère (1) et/ou de la force actuelle, exercée par la charge (3) sur l'hélicoptère (1) en direction de sa distance (18) à l'hélicoptère (1) et qui correspond à une vitesse verticale de la charge, l'instrument d'affichage (7) étant conçu pour afficher visuellement la valeur de façon continue par un affichage (10) se déplaçant avec une variation de la valeur dans le sens vertical.

7. Dispositif selon la revendication 6, **caractérisé en ce que** l'instrument d'affichage (7) est disposé à côté d'un horizon (5) artificiel de l'hélicoptère (1).

8. Dispositif selon la revendication 6 ou 7, **caractérisé en ce que** l'instrument d'affichage (7) est prévu comme alternative et/ou en superposition de l'affichage d'une vitesse de montée ou de descente de l'hélicoptère (1) .

9. Dispositif selon l'une des revendications 6 à 8, **caractérisé en ce qu'**un dispositif d'analyse (8) détermine la valeur en utilisant le signal de sortie d'un capteur de position (14), capteur de distance (11, 15), capteur d'accélération (13) et/ou capteur de force (12) disposé sur la charge (3) ou l'hélicoptère (1).

10. Dispositif selon la revendication 9, **caractérisé en ce que** le dispositif d'analyse (8) présente un filtre, un élément de différentiation, un élément d'intégration et/ou un amplificateur proportionnel et un additionneur pour au moins un signal de sortie.

11. Dispositif selon l'une des revendications 6 à 10, **caractérisé en ce que** l'instrument d'affichage (7) est une zone partielle d'un écran d'affichage ou d'un affichage d'instruments (6) projeté dans le champ visuel d'un pilote de l'hélicoptère (1).
